# EUROPEAN PATENT APPLICATION

(11) **EP 4 814 832 A1**
(43) Date of publication of application: **30.09.2026**
(21) Application number: 25166999.0
(22) Date of filing: 28.03.2025
(51) Int. Cl.: G06Q 10/08, G06Q 10/30

(54) **SYSTEM FOR MONITORING THE TRADE OF SECONDARY RAW MATERIALS**

(71) Applicant: Fundacja "RecycLife", 32-091 Michalowice (PL)
(72) Inventor: ROMEK, Konrad, 30-408 Krakow (PL); WAKSMUNDZKI, Lukasz, 31-808 Krakow (PL); STRONCZEK, Anna, 32-091 Michalowice (PL)
(74) Representative: Markieta, Jaroslaw Franciszek

(57) **Abstract**

The subject of the application is a system for monitoring the trade of secondary raw materials using tokens, comprising a registration station at a collection point (50) for secondary raw materials, configured to generate a unique digital token (110) representing a received object (120) constituting a secondary raw material; a carrier (130) of the unique digital token (110) representing the received object (120) constituting a secondary raw material, configured to be issued to an entity (40) delivering secondary raw material objects (120) configured to deliver a unique digital token (110) representing the received object (120) and a platform configured to issue unique digital tokens (110) from token carriers, process exchanges of unique digital tokens (110) representing received objects (120), and maintain a register (150) of unique digital tokens (110) representing received objects (120) constituting secondary raw materials.

## Description

The subject of the invention is a system for monitoring the trade of secondary raw materials. In particular, it is a computer-based system for the generation and trade of unique digital tokens assigned to individual products suitable for secondary processing (recycling).

Publication WO2016112099A1 discloses a central commodity management system that tracks the production, sale, and distribution of a commodity using data embedded in a physical component associated with the commodity. The system monitors the recycling of the commodity to produce a refurbished product and calculates the environmental value of the refurbished product based on the embedded data. The central management system allows the environmental value to be decoupled from the refurbished product.

Publication CN109523317A discloses a distributed ecological token system that connects all alliance members through a token scheme and associated incentive mechanisms. It enables members to share relevant resources and facilitates the flow of products among various alliance participants. According to the technical framework, each member group forms a decentralized ecological alliance. The alliance operator issues a circulation pass, and the entire circulation process is recorded on a blockchain. Users access services provided by alliance members using a digital identifier, which can circulate seamlessly among all members. The blockchain smart contract implements the logic of the circulation pass and the digital identifier, ensuring mutual trust between participants, resistance to tampering of historical records, and distributed storage of information related to the digital identifier.

Publication US2008255899A1 discloses a set of methods and systems for tracking and/or managing any combination of energy consumption, greenhouse gas emissions, carbon credits, and/or costs associated with one or more devices, one or more locations, or an entire enterprise.

A problem existing in the prior art is the absence of a system capable of monitoring the individualized flow of secondary raw materials within circular economy.

The gist of the invention lies in a system for monitoring the trade of secondary raw materials, comprising a registration station located at a collection point for secondary raw materials, configured to generate a unique digital token representing a received object constituting a secondary raw material. The system is further equipped with a carrier of the unique digital token representing the received secondary raw material object, adapted for issuance to an entity delivering such objects. The system also comprises a platform for the exchange of unique digital tokens representing received secondary raw material objects, configured to issue unique digital tokens from token carriers, process token exchanges, and maintain a register of unique digital tokens representing the received secondary raw material objects.

The system according to the invention is characterized in that the unique digital token representing the received object constituting a secondary raw material is associated with the physical properties of the secondary raw material, in particular the type of material, degree of processing, and weight.

The system is characterized in that the unique digital token is associated with the origin of the secondary raw material and includes the identifier of the manufacturer of the object and the identifier of the station generating the token at the collection point.

The register of unique digital tokens representing received secondary raw material objects is implemented as a blockchain. Alternatively, the register may take the form of a centralized relational database.

The system is provided with a reporting module configured to generate summaries based on the register of unique digital tokens representing received secondary raw material objects.

The implementation of the system according to the invention enables the creation of a database of collected waste categorized by availability location, as well as the aggregation of data on waste (type, weight, origin, manufacturer), and the planning of recyclable material volume. Based on the collected data, the system can forecast the quantity of secondary raw materials available to recycling companies, enabling them to plan production and optimize supply chains. The system also supports reporting under Extended Producer Responsibility (EPR) frameworks and recycling performance levels. Digital tokens serve as verifiable proof of waste collection, facilitating compliance with EPR reporting requirements. Additionally, the system allows for the generation of reports for local authorities and manufacturers concerning achieved recycling levels by fraction, enabling regional optimization of the waste management infrastructure.

An advantage of the system is the collection of individualized data on objects constituting secondary raw materials, which enables statistical, quantitative, and qualitative analysis of recovered material resources. This supports the reduction of environmental burden by optimizing the use of resources available within the circular economy.

The subject matter of the invention is further illustrated in a preferred embodiment shown in the drawings, in which:
- Fig. 1: illustrates the flow of secondary raw materials utilizing the system according to the invention;
- Fig. 2: shows an embodiment of the system according to the invention.

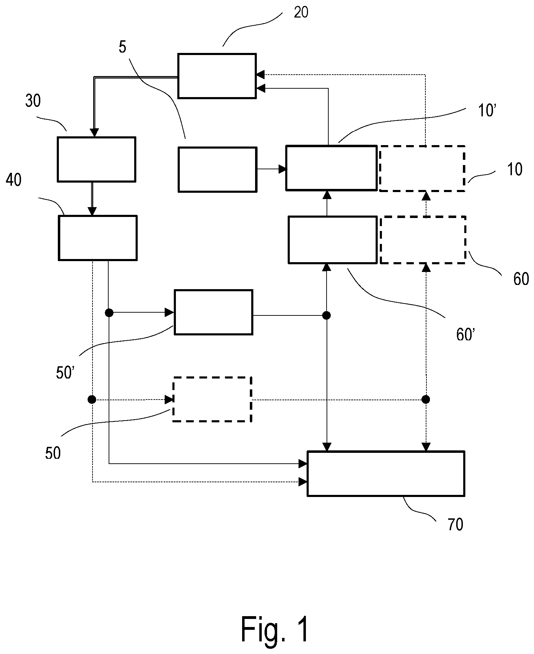

Figure 1 presents the flow of secondary raw materials utilizing the system according to the invention. Primary materials are extracted from the natural environment by the producer (5). Products made from primary materials are introduced into the primary market (10), from which manufacturers (20) obtain materials for production. These products are introduced by the manufacturers (20) into the product market (30). From the market (30), the products are obtained by consumers or end-users (40), who use the goods and become holders of objects constituting secondary raw materials. The flow of final products is indicated with a double solid line. The typical flow of secondary raw material objects is marked with a single solid line.

Such objects typically include packaging waste, e.g. glass packaging, paper packaging, plastic packaging, aluminum packaging, steel packaging, as well as other waste such as batteries, textiles, or electronic equipment-each of which can be classified as a waste fraction based on type. Objects constituting secondary raw materials have defined physical properties, in particular material type, degree of processing, and weight. These objects can also be classified based on their origin from a given manufacturer (20).

Consumers or recipients (40) who consume goods and possess objects constituting secondary raw materials may either dispose of them at a mixed waste landfill site (70) or deliver them to a secondary raw material collection point (50, 50'). Disposal at landfill site (70) is the least optimal method, as it significantly hinders material recovery; currently, secondary raw materials are not recovered from mixed waste landfills due to the high costs of such processes. Preferably, consumers or recipients (40) direct the secondary raw material objects to collection points (50, 50'). At the collection point (50'), standard procedures such as sorting into waste fractions, weighing, and transfer to a secondary raw material processing facility (60') are conducted. In contrast, at the collection point (50) equipped with a system station according to the invention, in addition to typical procedures such as sorting and weighing, unique digital tokens representing the received secondary raw material objects are generated. Such a digital token is preferably linked to the physical properties of the secondary raw material, in particular the type of material, degree of processing, and weight. The degree of processing reflects the object's suitability for recycling: for example, metals can undergo multiple recycling cycles without degrading their physical properties, plastics can be recycled several times, while paper can be processed only a few times due to irreversible shortening of cellulose fibers during each processing cycle. Furthermore, the unique digital token representing the received secondary raw material object is also associated with its origin, and includes the identifier of the manufacturer (20) of the object as well as the identifier of the station that generated the token at the collection point (50). The uniqueness of the digital token can be ensured using conventional methods known in the art, e.g., by generating a serial number, a code with a timestamp, and an origin identifier.

Fig. 1 shows the flow of secondary raw materials marked with unique digital tokens is indicated by a dashed line, whereas the traditional flow of raw materials is indicated by a single solid line, as previously mentioned.

Products received within the framework of the traditional flow, without being assigned a digital token, are processed at the processing facility (60') and introduced into the raw materials market (10'), which also includes primary materials sourced from the natural environment by the manufacturer (5). Secondary raw materials obtained within the system according to the invention are also directed to a processing facility (60) and subsequently to the market (10). Since these materials are assigned a unique digital token, they are countable, their quantity is known, and it is therefore possible to determine the share of products from a specific manufacturer within the overall trade of the circular economy. Naturally, some returned objects constituting secondary raw materials are not suitable for further processing and are thus directed to the landfill (70). Through the use of the system for generating unique digital identifiers, manufacturers (20) can fulfill the requirements of Extended Producer Responsibility (EPR) systems and optimize economic processes with regard to environmental impact and their own participation in the closed-loop economy. The implementation of unique digital tokens also enables trading of such tokens and further optimization related to the utilization of secondary raw materials by introducing incentives for their reuse, which contributes to the reduction of environmental burden associated with the extraction of natural resources.

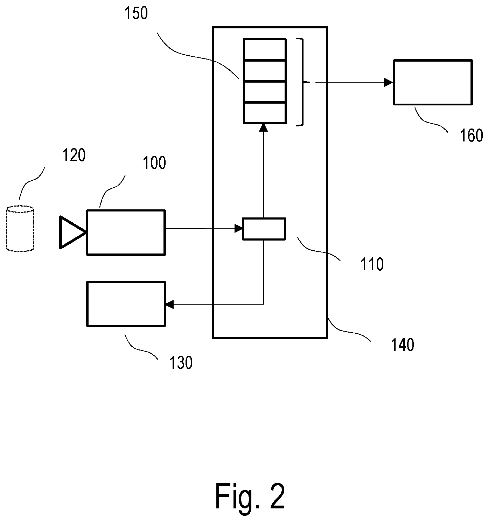

Fig. 2 shows a system according to the invention comprising a registration station (100) located at a collection point (50) for secondary raw materials, configured to generate a unique digital token (110) representing a received object (120) constituting a secondary raw material. The system further includes a carrier (130) of the unique digital token (110), configured to be issued to an entity (40) delivering objects constituting secondary raw materials. The system also comprises a platform (140) for the exchange of unique digital tokens (110) representing received objects (120) constituting a secondary raw material, configured to load unique digital tokens (110) representing received objects (120) constituting a secondary raw material into carriers (130). The carrier (130) may take the form of a mobile application (wallet) for storing digital tokens or a record in the register of an entity engaged in the trading of unique digital tokens (110).

The platform (140) is also configured to handle the accounting of exchanges of unique digital tokens (110) representing received secondary raw material objects (120), and to maintain a register (150) of such tokens 110 corresponding to the received 120 constituting a secondary raw material.

Based on the register (150) of unique digital tokens (110) representing received secondary raw material objects (120), it is possible to report and analyze the collected data both spatially-based on the location of stations (100)-and temporally. Preferably, the reporting module (160) is configured to generate reports and summaries in accordance with the principles of Extended Producer Responsibility (EPR).

The unique digital token (110) representing the received secondary raw material object (120) is associated with the physical properties of the secondary raw material, in particular the type of material, degree of processing, and weight.

The unique digital token (110) representing the received secondary raw material object (120) is also linked to the origin of the object and includes the identifier of the manufacturer (20) of the secondary raw material object and the identifier of the station at the collection point (50) where the token was generated.

The register (150) of unique digital tokens representing received secondary raw material objects may be implemented as a blockchain. Alternatively, it may be implemented as a centralized relational database.

The system according to the invention is preferably equipped with a reporting module (160) that generates summaries based on the register (150) of unique digital tokens (110) representing received objects (120) constituting secondary raw materials.

In one aspect, the invention also concerns the unique digital token (110) generated by means of the system according to the invention. Such a token may be subject to trading, for example, within an exchange-type system-a kind of trading platform for collected secondary raw materials-using unique digital tokens under a specific designation to represent physical objects (waste). Unique digital tokens may also be applied in smart LCA (Life Cycle Assessment) systems, enabling the monitoring of a product's life cycle from market introduction to recycling. Upon the implementation of individual product identification, e.g. Digital Product Passport, the system ensures full data circulation for the purpose of assessing the product's environmental impact throughout its lifecycle, including resource extraction, production, use, and final disposal or recycling.

## Claims

1. A system for monitoring the trade of secondary raw materials, comprising:
a registration station at a collection point (50) for secondary raw materials, configured to generate a unique digital token (110) representing a received object (120) constituting a secondary raw material;
a carrier (130) of the unique digital token (110) representing a received object (120) constituting a secondary raw material, adapted to be issued to an entity (40) delivering objects (120) constituting secondary raw materials;
a platform (140) for the exchange of unique digital tokens (110) representing received objects (120) constituting secondary raw materials, configured to:
issue unique digital tokens (110) representing received objects from token carriers,
process exchanges of unique digital tokens (110) representing received objects (120) constituting secondary raw materials,
maintain a register (150) of unique digital tokens (110) representing received objects (120) constituting secondary raw materials.

2. The system according to claim 1, **characterized in that** the unique digital token (110) representing the received object (120) constituting a secondary raw material is associated with the physical properties of the secondary raw material, in particular the type of material, degree of processing, and weight.

3. The system according to claim 1 or 2, **characterized in that** the unique digital token (110) representing the received object (120) constituting a secondary raw material is associated with the origin and includes the identifier of the manufacturer (20) of the object and the identifier of the station generating the token at the collection point (50) for the received object.

4. The system according to any one of claims 1 to 3, **characterized in that** the register (150) of unique digital tokens (110) representing received objects (120) constituting secondary raw materials is implemented as a blockchain.

5. The system according to any one of claims 1 to 4, **characterized in that** the register (150) of unique digital tokens (110) representing received objects (120) constituting secondary raw materials is implemented as a centralized relational database.

6. The system according to any one of claims 1 to 5, **characterized in that** it comprises a reporting module (160) configured to generate reports based on the register (150) of unique digital tokens (110) representing received objects (120) constituting secondary raw materials.

7. A unique digital token (110) generated using the system according to any one of claims 1 to 6.
